(19) Europäisches Patentamt
European Patent Office
Office européen des brevets

(11) **EP 2 136 188 B1**

(12) **EUROPEAN PATENT SPECIFICATION**

(45) Date of publication and mention
of the grant of the patent:
**16.03.2011 Bulletin 2011/11**

(51) Int Cl.:
***G01F 23/26*** (2006.01)     ***G01F 25/00*** (2006.01)

(21) Application number: **09162846.1**

(22) Date of filing: **16.06.2009**

(54) **Capacitive liquid level sensor**

Kapazitiever Flüssigkeitsfüllstandsfühler

Capteur capacitif de niveau de liquide

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **18.06.2008 IT PD20080178**

(43) Date of publication of application:
**23.12.2009 Bulletin 2009/52**

(73) Proprietor: **Dab Pumps S.p.A.**
**35035 Mestrino (Padova) (IT)**

(72) Inventors:
• **Trentin, Enrico**
**36053, GAMBELLARA VI (IT)**
• **Franchetti, Bruno**
**36040, BRENDOLA VI (IT)**
• **Sinico, Francesco**
**36075, MONTECCHIO MAGGIORE VI (IT)**

(74) Representative: **Modiano, Micaela Nadia**
**Dr. Modiano & Associati SpA**
**Via Meravigli 16**
**20123 Milano (IT)**

(56) References cited:
**US-A- 3 376 746      US-A1- 2005 007 239**
**US-B1- 7 127 943**

## Description

The present invention relates to a level sensor particularly for liquids.

Currently known and commercially available resistive and capacitive sensors have shown that they work correctly only in clean water, whereas if they are immersed in liquids other than clean water, such as water and salt, water and detergents, and in general water such as may flow through a pump for moving processed or waste water in domestic or industrial uses, they do not operate correctly.

This malfunction is revealed by the reporting of the presence of liquid even when actually there is none.

This event of incorrect reporting of the presence of a liquid that is not present is due to the formation of a film on the outer shell of the sensor, such film being formed by one or more substances contained in the water that is moved by the pump in which the sensor is provided.

This film induces the sensor to report a substantially constant presence of liquid when the liquid has instead fully or partially flowed out.

For example, a level sensor of the capacitive type comprises a capacitor, the mutually opposite plates of which have a certain surface S and are arranged at a certain mutual distance D, and the liquid whose level is measured penetrates between them and has a specific dielectric constant E.

The capacitance $C = E \times (S/D)$ varies as the level, and therefore the quantity, of liquid between the plates varies.

The liquid, by flowing in contact with the plates, deposits thereon the cited substances, which by adhering to such plates prevent their correct operation, since such plates detect the presence of the film of the deposited substance, which however is not the liquid whose level they should measure.

Generally, when this occurs, if for example the level sensor is provided on a pump, such sensor reports the presence of water to be aspirated when instead there is none, leading the pump to run empty, i.e., to an unwanted malfunction, in view of the various problems that empty running of a pump can entail.

US 3 376 746 discloses a level sensor as defined in the preamble of claim 1.

US 2005/007239 discloses a magnetic field response measurement acquisition system.

US 7 127 943 discloses a method and apparatus for detection of fluid level in a container.

The aim of the present invention is to provide a level sensor particularly for liquids that is capable of obviating the above-mentioned drawbacks of similar sensors of the known type.

Within this aim, an object of the present invention is to provide a level sensor that is fully efficient in any situation and is substantially insensitive to the presence of substances that are harmful for the operation of known sensors.

Another object of the present invention is to provide a level sensor that can also be applied to pumps of a per se known type.

Another object of the invention is to provide a level sensor that is easy to provide in practice.

Another object of the present invention is to provide a level sensor particularly for liquids that can be manufactured with known systems and technologies.

This aim and these and other objects, which will become better apparent hereinafter, are achieved by a level sensor particularly for liquids, as defined in claim 1.

Further characteristics and advantages of the invention will become better apparent from the following detailed description of a preferred but not exclusive embodiment thereof, illustrated by way of non-limiting example in the accompanying drawings, wherein:

Figure 1 is a schematic side view of a sensor according to the invention, in the fully immersed configuration;

Figure 2 is the same view of Figure 1, with the sensor according to the invention in a substantially fully emerged configuration.

With reference to the figures, a level sensor particularly for liquids, according to the invention, is designated generally by the reference numeral 10.

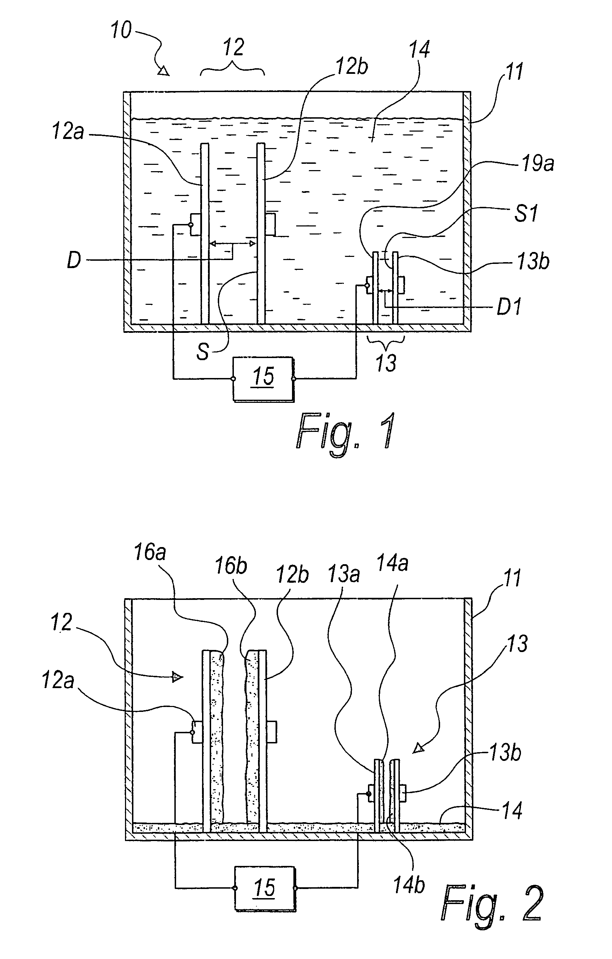

The level sensor 10, arranged for example inside a generic container 11, comprises two capacitors 12 and 13 arranged side by side, to be immersed in a same liquid 14 whose level is to be measured, as exemplified in Figure 1.

The two capacitors, the first capacitor 12 and the second capacitor 13, have the same capacitance when they are immersed in the liquid 14, C for the first capacitor 12 and C1 for the second capacitor 13, but a different geometry.

Therefore, $C = E \times (S/D) = E \times (S1/D1) = C1$, where E is the dielectric constant of the liquid 14 that becomes interposed between both pairs of plates 12a, 12b and 13a, 13b.

Both capacitors 12 and 13 are connected to a control unit 15 that is designed to compare the signals that originate from the two capacitors 12, 13, as described hereinafter.

In the particular embodiment of the invention described here, which must be understood to be a non-limiting example thereof, the surface S of the plates 12a and 12b of the first capacitor 12 is larger than the surface S1 of the plates 13a, 13b of the second capacitor 13, and the distance D between the plates 12a, 12b of the first capacitor 12 is greater than the distance D1 between the plates 13a, 13b of the second capacitor 13, in compliance with the proportion $(S/D) = (S1/D1)$.

The distance D1 between the plates 13a, 13b of the second capacitor 13 is such as to define an interspace that is substantially occupied entirely by a film 14a, 14b of liquid 14 that forms on the two facing plates 13a, 13b, as exemplified in Figure 2.

In this manner, when the two capacitors 12 and 13 are out of the liquid 14, they do not have the same capacitance, since the film 14a and 14b produces a significant variation of the value of the dielectric constant E1' of the second capacitor 13, which is different with respect to the dielectric constant of air Ea, such as it should be when the container 11 is substantially empty.

At the same time, the plates 12a and 12b of the first capacitor 12 are each covered by an additional film of liquid, respectively 16a and 16b; in this case, the greater distance between the two plates 12a and 12b causes the variation of the dielectric constant of the first capacitor 12 with respect to the value of the dielectric constant of the air, which is expected if the container 11 is empty, to be far smaller than the variation of the dielectric constant of the second capacitor 13, and therefore with:

Ea = dielectric constant of air

E' = dielectric constant of the first capacitor 12 in air, i.e., when the container 11 is substantially empty,

E1'= dielectric constant of the second capacitor 13 in air,

the result is:

$$E' \cong Ea \neq E1'$$

The control unit 15 is in fact designed to operate as follows:

- detect the value of the capacitances C, C1 of the two capacitors 12, 13,
- if C = C1, with a preset error range, then the control unit 15 emits a first signal that indicates that the sensor 10 is operating correctly and, for example, a pump in which the sensor is integrated can continue to operate normally;
- if C ≠ C1, outside of such preset error range, then the control unit 15 emits a second signal that is designed for the safety halting of the operation of the pump, since there is no certainty as to the level of the liquid 14 and therefore there is the risk of a damaging empty running of the pump.

The sensor 10 according to the invention must be understood to be producible even with plates of a shape that is different from the exemplified flat one.

The sensor 10 according to the invention can be advantageously associated and combined with other sensors, for example of the resistive or inductive type, and the like.

In practice it has been found that the invention thus described achieves the proposed aim and objects.

In particular, the present invention provides a level sensor that is fully efficient in any situation and is substantially insensitive to the presence of substances that are harmful for the operation of known sensors.

Moreover, the present invention provides a level sensor that can also be applied to pumps of a per se known type.

Moreover, the present invention provides a level sensor that is easy to manufacture.

Moreover, the present invention provides a level sensor particularly for liquids that can be manufactured with known systems and technologies.

The invention thus conceived is susceptible of numerous modifications and variations, all of which are within the scope of the appended claims; all the details may further be replaced with other technically equivalent elements.

In practice, the materials used, so long as they are compatible with the specific use, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

**Claims**

1. A level sensor (10) particularly for liquids, comprising at least two capacitors (12, 13) arranged side by side, to be immersed in the same liquid (14) whose level is to be measured and having a different geometry (S, S1, D, D1), both of said capacitors being connected to a control unit (15) that is designed to compare the signals that arrive from the two capacitors, **characterized in that** said at least two capacitors have the same capacitance when they are immersed in said liquid (14) and **in that** a distance (D) between the plates of the first capacitor (12) is greater than a distance (D1) between the plates of the second capacitor (13).

2. The level sensor according to claim 1, **characterized in that** the surface (S) of two plates (12a, 12b) of the first capacitor (12) is larger than the surface (SI) of two plates (13a, 13b) of the second capacitor (13).

3. The level sensor according to the preceding claims, **characterized in** said distance (D1) between the plates of the second capacitor (13) is such as to form an interspace that is occupied substantially entirely by a film (14a, 14b) of liquid that forms on the two facing plates (13a, 13b).

4. The level sensor according to the preceding claims, **characterized in that** said control unit (15) is designed to operate as follows:

   - detect the value of the capacitances (C, C1) of the two capacitors (12, 13),
   - if C = C1, with a preset error range, then said control unit (15) emits a first signal that indicates that the sensor (10) is operating correctly;
   - if C ≠ C1, outside of said preset error range, then said control unit (15) emits a second signal that is designed for the safety halting of the operation, since there is no certainty as to the level of the liquid.

## Patentansprüche

1. Füllstandsfühler (10), insbesondere für Flüssigkeiten, umfassend zumindest zwei nebeneinander angeordnete Kondensatoren (12, 13), die in dieselbe Flüssigkeit (14) einzutauchen sind, deren Füllstand zu messen ist, und die eine unterschiedliche Geometrie (S, S1, D, D1) haben, wobei beide Kondensatoren mit einer Steuereinheit (15) verbunden sind, die so ausgelegt ist, dass sie die von den beiden Kondensatoren ankommenden Signale vergleicht, **dadurch gekennzeichnet, dass** die zumindest zwei Kondensatoren den gleichen kapazitiven Widerstand haben, wenn sie in die Flüssigkeit (14) eingetaucht sind, und dass ein Abstand (D) zwischen den Platten des ersten Kondensators (12) größer als ein Abstand (D1) zwischen den Platten des zweiten Kondensators (13) ist.

2. Füllstandsfühler nach Anspruch 1, **dadurch gekennzeichnet, dass** die Fläche (S) zweier Platten (12a, 12b) des ersten Kondensators (12) größer als die Fläche (S1) zweier Platten (13a, 13b) des zweiten Kondensators (13) ist.

3. Füllstandsfühler nach den vorhergehenden Ansprüche, **dadurch** gekennzeichent, dass der Abstand (D1) zwischen den Platten des zweiten Kondensators (13) derart ist, dass er einen Zwischenraum bildet, der im Wesentlichen vollständig von einem Flüssigkeitsfilm (14a, 14b) ausgefüllt ist, der sich auf den zwei einander zugewandten Platten (13a, 13b) bildet.

4. Füllstandsfühler nach den vorhergehenden Ansprüchen, **dadurch gekennzeichnet, dass** die Steuerheit (15) so ausgelegt ist, dass sie folgendermaßen arbeitet:

   - den Wert der kapazitiven Widerstände (C, C1) der beiden Kondensatoren (12, 13) erfassen,
   - wenn C = C1, mit einem vorgegebenen Fehlerbereich, dann gibt die Steuereinheit (15) ein erstes Singal ab, das anzeigt, dass der Fühler (10) korrekt arbeitet,
   - wenn C ≠ C1, außerhalb des vorgegebenden Fehlerbereichs, dann gibt die Steuereinheit (15) ein zweites Signal ab, das für den Sicherheitsstopp des Betriebs ausgelegt ist, da keine Gewissheit über den Flüssigkeitsstand besteht.

## Revendications

1. Un capteur de niveau (10) en particulier pour des liquides, comprenant au moins deux condensateurs (12, 13) agencés côte à côte, pour être immergés dans le même liquide (14) dont le niveau est à mesurer et ayant une géométrie différente (S, S1, D, D1), les deux desdits condensateurs étant connectés à une unité de contrôle (15) qui est conçue pour comparer les signaux qui arrivent depuis les deux condensateurs, **caractérisé en ce que** lesdits au moins deux condensateurs ont la même capacité quand ils sont immergés dans ledit liquide (14) et **en ce qu'**une distance (D) entre les plaques du premier condensateur (12) est plus grande qu'une distance (D1) entre les plaques du deuxième condensateur (13).

2. Le capteur de niveau selon la revendication 1, **caractérisé en ce que** la surface (S) des deux plaques (12a, 12b) du premier condensateur (12) est plus grande que la surface (SI) des deux plaques (13a, 13b) du deuxième condensateur (13).

3. Le capteur de niveau selon les revendications précédentes, **caractérisé en ce que** ladite distance (D1) entre les plaques du deuxième condensateur (13) est telle qu'elle forme un espace intermédiaire qui est occupé sensiblement entièrement par un film (14a, 14b) de liquide qui se forment sur les deux plaques (13a, 13b) se faisant face.

4. Le capteur de niveau selon les revendications précédentes, **caractérisé en ce que** ladite unité de contrôle (15) est conçue pour opérer comme suit :

   - détecter la valeur de la capacité (C, C1) des deux condensateurs (12, 13),
   - si C = C1, avec un taux d'erreur prédéterminé, alors ladite unité de contrôle (15) émet un premier signal qui indique que le capteur (10) fonctionne correctement;
   - si C ≠ C1, en dehors du domaine d'erreur-prédéterminé, alors ladite unité de contrôle (15) émet un deuxième signal qui est conçu pour l'arrêt du fonctionnement en toute sécurité, puis-

**EP 2 136 188 B1**

qu'il n'y a aucune certitude sur le niveau de liquide.

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3376746 A
- US 2005007239 A
- US 7127943 B